# EUROPÄISCHE PATENTSCHRIFT

(11) **EP 1 438 146 B1**
(45) Veröffentlichungstag und Bekanntmachung des Hinweises auf die Patenterteilung: **08.02.2006**
(21) Anmeldenummer: 02782708.8
(22) Anmeldetag: 15.10.2002
(51) Int. Cl.: B07C 3/14

(54) **VERFAHREN UND VORRICHTUNG ZUR BEARBEITUNG VON AUF OBERFLÄCHEN VON POSTSENDUNGEN BEFINDLICHEN GRAPHISCHEN INFORMATIONEN**
METHOD AND DEVICE FOR PROCESSING GRAPHIC INFORMATION LOCATED ON SURFACES OF POSTAL ARTICLES
PROCEDE ET DISPOSITIF POUR TRAITER DES INFORMATIONS GRAPHIQUES SITUEES SUR DES SURFACES D'ENVOIS POSTAUX

(30) Priorität: 16.10.2001 DE 10150457
(43) Veröffentlichungstag der Anmeldung: 21.07.2004
(60) Teilanmeldung: 05010085.8
(73) Patentinhaber: Deutsche Post AG, 53113 Bonn (DE)
(72) Erfinder: FERY, Peter, 64673 Zwingenberg (DE); HELMUS, Jürgen, 53229 Bonn (DE); MEIER, Gunther, 64354 Reinheim (DE); STUMM, Dieter, 26629 Grossefehn (DE); VULLRIEDE, Carsten, 29693 Hodenhagen (DE)
(74) Vertreter: Jostarndt, Hans-Dieter
(86) Internationale Anmeldenummer: PCT/DE2002/003864
(87) Internationale Veröffentlichungsnummer: WO 2003/035284

(56) Entgegenhaltungen:
- EP-A- 0 913 208
- EP-A- 1 190 779
- WO-A-89/01831
- WO-A-02/057030
- FR-A- 2 646 364
- US-A- 5 581 628
- US-A- 5 970 166

## Beschreibung

Die Erfindung betrifft ein Verfahren zum Bearbeiten von Postsendungen, wobei auf den Postsendungen befindliche graphische Informationen im Bereich einer Briefbearbeitungsstation erfasst und untersucht werden, worauf sie an eine Bildverarbeitungseinheit übermittelt und von dieser Bildverarbeitungseinheit weiterverarbeitet werden.

Die Erfindung betrifft ferner eine für die Durchführung des Verfahrens geeignete Vorrichtung.

Aus der europäischen Patentanmeldung EP 0 913 206 A1 ist ein Verfahren und eine Anordnung zur Ermittlung von Verteilinformationen bekannt. Zur Bestimmung der Verteilinformationen werden die Anschriften von Sendungen in einer Bearbeitungsmaschine mit einem OCR-System eingelesen, wobei es sich bei der Bearbeitungsmaschine insbesondere eine Sortiermaschine handelt. Nach eindeutiger Erkennung der Verteilinformationen während einer Zwischenspeicherung werden die Sendungen in einer mechanischen Laufzeitstrecke mit einem entsprechenden Code versehen. Die vom OCR-System nicht gelesenen Sendungen werden auf videokodierplatzen eines Videokodiersystems dargestellt und manuell kodiert. In jeder Bearbeitungsmaschine werden die Bilder der Sendungen gespeichert und verwaltet, deren Verteilinformationen in einer Zwischenspeicherung der Sendungen nicht automatisch eindeutig erkannt wurden. Der Füllstand der mechanischen Laufzeitstrecke mehrerer Bearbeitungsmaschinen wird regelmäßig als Statusinformation erfasst und daraus ein Rangordnungswert ermittelt. Jeder Videokodierplatz fordert bei Bedarf die aktuellen Randordnungswerte aller Bearbeitungsmaschinen ab und führt nach einheitlichen Regeln eine zufallsüberlagerte Auswahl einer Bearbeitungsmaschine durch und fordert von dieser Bearbeitungsmaschine das nächste Bild an.

Der Erfindung liegt die Aufgabe zugrunde, die Verarbeitung der graphischen Informationen zuverlässig und in einer für einen Massenbetrieb in Postzentren geeigneten Geschwindigkeit durchzuführen.

Erfindungsgemäß wird diese Aufgabe durch ein Verfahren mit den Merkamlen des Anspruches 1 gelöst. Vorteilhafte weiterbildungen des Verfahrens ergeben sich aus den Unteransprüchen 2-9. Anspruch 10 gibt eine Vorrichtung zur Durchführung des Verfahrens an.

Die Erfindung sieht vor, dass die auf der Oberfläche der Sendungen befindlichen graphischen Informationen in mehreren Bearbeitungsstationen erfasst, an eine Bildverarbeitungseinheit übermittelt und von der Bildverarbeitungseinheit bearbeitet werden.

Eine weitere Erhöhung der Geschwindigkeit der Verarbeitung der graphischen Informationen lässt sich zweckmäßigerweise dadurch erzielen, dass die auf der Oberfläche der Postsendungen befindlichen graphischen Informationen zuerst lokal ausgewertet werden, dass ermittelt wird, ob die graphischen Informationen von erwarteten graphischen Informationen abweichen und dass für den Fall, dass die ermittelten graphischen Informationen von erwarteten graphischen Informationen abweichen, die ermittelten graphischen Informationen an eine zentrale Bildverarbeitungseinheit übermittelt werden.

Es ist besonders vorteilhaft, dass eine Sortierung der Postsendungen in Abhängigkeit von den ermittelten graphischen Informationen erfolgt.

Die auf den Postsendungen vorhandenen graphischen Informationen werden vorzugsweise auch für weitere Anwendungen eingesetzt, beispielsweise um eine schnelle und zuverlässige Adressierung der Postsendungen zu erzielen.

Eine weitere vorteilhafte Fortbildung der Erfindung zeichnet sich dadurch aus, dass durch einen Vergleich zwischen den auf den Postsendungen vorhandenen graphischen Informationen und erwarteten graphischen Informationen eine Überprüfung des für die Postsendungen entrichteten Entgelts erfolgt.

Um die Effizienz dieses Verfahrens weiter zu erhöhen ist es vorteilhaft, dass die Prüfung, ob die Postsendungen ein erwartetes Entgelt aufweisen, zweistufig stattfindet, wobei zunächst lokal im Bereich der Bearbeitungsmaschinen die auf den Postsendungen vorhandenen graphischen Informationen mit den erwarteten graphischen Informationen verglichen werden, und dass die graphischen Informationen der Postsendungen, bei denen Abweichungen zwischen den vorhandenen graphischen Informationen und den erwarteten graphischen Informationen in den lokalen Bearbeitungsstationen ermittelt wurden, ein erneuter Vergleich zwischen den ermittelten graphischen Informationen und den erwarteten graphischen Informationen in der zentralen Bildverarbeitungseinheit erfolgt.

Eine Bearbeitung von Postsendungen mit voneinander verschiedenen Freimachungen lässt sich dadurch erzielen, dass die auf den Oberflächen der Postsendungen befindlichen graphischen Informationen einer oder mehreren erwarteten Sendungsarten zugeordnet werden, und dass die Überprüfung in für die Freimachungsarten spezialisierten Lesegeräten erfolgt.

Hierbei ist es besonders zweckmäßig, dass die Zuordnung der graphischen Information zu den Lesegeräten durch die zentrale Bildverarbeitungseinheit erfolgt.

Beispiele für die dargestellten spezialisierten Lesegeräte sind Geräte, die in den graphischen Angaben enthaltene codierte Informationen durch Entziffern des Codes ermitteln und mit anderen Angaben vergleichen können. Beispielsweise dienen derartige spezialisierte Lesegeräte zum Erfassen von in digitalen Freimachungsvermerken enthaltenen codierten Informationen.

Derartige Lesegeräte sind Beispiele für Bildbearbeitungsstationen in für die Durchführung des Verfahrens geeignete Vorrichtung.

Eine besonders geeignete Vorrichtung zum Bearbeiten von Postsendungen mit mehreren Bearbeitungsmaschinen für die Postsendungen, wobei die Bearbeitungsmaschinen Mittel zum Erfassen auf den Postsendungen befindlichen graphischen Informationen enthalten, zeichnet sich dadurch aus, dass die Mittel zum Erfassen der graphischen Informationen mit wenigstens einem Mittel zum Verarbeiten der graphischen Informationen derart verbunden sind, dass das Mittel zum Verarbeiten der graphischen Informationen die graphischen Informationen von mehreren Bearbeitungsmaschinen verarbeiten kann.

Weitere Vorteile, Besonderheiten oder zweckmäßige Weiterbildungen der Erfindung ergeben sich aus den Unteransprüchen und der nachfolgenden Darstellung bevorzugter Ausführungsbeispiele.

Bei der nachfolgenden Darstellung enthält ein Bearbeitungszentrum für Postsendungen, beispielsweise ein Brief- oder Frachtzentrum eine zentrale Bildverarbeitungseinheit. Die dazugehörige Darstellung ist besonders vorteilhaft, da sie einen möglichst effektiven Einsatz von Rechenkapazitäten bei geringem Einsatz von Datenübertragungen zwischen den verschiedenen Recheneinheiten ermöglicht.

Die Erfindung ist jedoch nicht auf die dargestellten Beispiele beschränkt. Beispielsweise kann ein Bearbeitungszentrum für Postsendungen mehrere zentrale Bildverarbeitungseinheiten enthalten oder eine zentrale Bildverarbeitungseinheit kann die graphischen Informationen mehrerer Brief- oder Frachtzentren verarbeiten.

Bei dem nachfolgenden Beispiel ist innerhalb eines Briefzentrums das Bildverarbeitungssystem mit anderen Komponenten an ein lokales Computernetzwerk angeschlossen.

Das Bildverarbeitungssystem hat eine Verbindung zu den jeweiligen Briefbearbeitungsmaschinen, insbesondere den Anschriftenlesemaschinen oder den Videocodierplätzen.

In dem dargestellten Fall dient das Bildverarbeitungssystem zu einer Bearbeitung von Sendungsbildern, die von den Primärlesern der Bildverarbeitungsmaschinen nicht erfolgreich gelesen werden konnten. Alternativ ist es möglich, die Sendungsbilder im Wesentlichen aller Primärleser mit der zentralen Bildverarbeitungseinheit zu bearbeiten. Beispielsweise ist es möglich, diese Bearbeitung unabhängig von dem Leseergebnis der Primärleser durchzuführen.

Das Bildverarbeitungssystem erhält von den Bildbearbeitungsmaschinen die auf den Postsendungen vorhandenen graphischen Informationen und vorzugsweise zusätzlich Begleitinformationen. -

Eine besonders schnelle und zuverlässige Bearbeitung der Postsendungen lässt sich dadurch erzielen, dass die Begleitinformationen Ergebnisse eines oder mehrerer Überprüfungsschritte der Postsendungen enthalten.

Die Verarbeitung der auf den Postsendungen vorhandenen graphischen Informationen kann sowohl sequentiell als auch parallel erfolgen.

Insbesondere ist es vorteilhaft, das Verfahren so durchzuführen, dass vorhandene Bildverarbeitungskapazitäten durch eine wirksame Verteilung der Bildverarbeitungsaufgaben auf verschiedene Bildverarbeitungseinheiten möglichst effektiv genutzt werden.

In dem dargestellten Bildverarbeitungssystem wirken die mit den Bearbeitungsmaschinen verbundenen lokalen Bildverarbeitungseinheiten als Primärleser und die spezialisierten Leseeinheiten als Sekundärleser. Es ist jedoch gleichfalls möglich, dass die Bildverarbeitungseinheiten anderer Bearbeitungsmaschinen als Sekundärleser wirken. Hierdurch wird die jeweils vorhandene Bearbeitungskapazität der Bildverarbeitungsgeräte genutzt.

Eine derartige Vorgehensweise eignet sich insbesondere für eine rasche Anpassung der Bildverarbeitungskapazitäten an Besonderheiten des betrieblichen Ablaufs. Beispielsweise kann bei einem Ausfall von mechanischen Komponenten einer Briefbearbeitungsmaschine die in ihr vorhandene Bildbearbeitungskapazität von den anderen Bildverarbeitungsmaschinen genutzt werden, so dass auch bei Betriebsstörungen eine Beeinträchtigung der Bearbeitung der Postsendungen möglichst vermieden wird.

Durch die dargestellten Maßnahmen kann der Bildverarbeitungsprozess schnell, wirksam und zuverlässig erfolgen.

Vorzugsweise beinhaltet der Bildverarbeitungsprozess die folgenden Schritte:
Zuerst werden die auf den Postsendungen vorhandenen graphischen Informationen erfasst, beispielsweise durch einen oder mehrere Sensoren und/oder eine Kamera.
Falls die Informationen nicht bereits in digitaler Form gewonnen werden, ist eine Digitalisierung der graphischen Informationen vorteilhaft.
Anschließend werden die graphischen Informationen einem oder mehreren Bildverarbeitungsschritten unterzogen.

Die Bildverarbeitungsschritte können sowohl eine Auswertung der graphischen Informationen als auch eine gezielte Weiterleitung der graphischen Informationen an eine spezialisierte und/oder freie Bearbeitungskapazität aufweisende Bildverarbeitungseinheit umfassen.

Der Begriff der Bildverarbeitung; beziehungsweise der Bildverarbeitungseinheit, ist daher in keiner Weise einschränkend zu verstehen. Insbesondere umfasst er die Transformation der graphischen Informationen in weitere graphische Informationen, beispielsweise die Umwandlung in ein anderes Format, die Weiterleitung der graphischen Informationen und/oder die Auswertung von in den graphischen Informationen enthaltenen, beziehungsweise aus den graphischen Informationen gewinnbaren weiteren Informationen, wie dem Lesen einer Empfängeradresse oder dem Entziffern einer in den graphischen Informationen enthaltenen codierten Information.

Außerdem beinhaltet der Begriff der Bildverarbeitung auch die Merkmale, die auf dem Gebiet der Bildverarbeitung gelegentlich als Bildinterpretation bezeichnet werden. Hierunter ist beispielsweise das Entziffern von Empfängeradressen durch das Lesen der die Empfängeradresse wiedergebenden graphischen Informationen (beispielsweise in Handschrift) mit umfasst.

Vorzugsweise erfolgt die Aufteilung der verschiedenen Bildverarbeitungsschritte auf verschiedene Bildverarbeitungseinheiten in Abhängigkeit von der jeweiligen Spezifizierung der Bildverarbeitungseinheit und/oder der freien Kapazität der Bildverarbeitungseinheiten.

Beispielsweise kann der Sendungsablauf für Sendungen, die digitale Freimachungsvermerke enthalten, wie folgt durchgeführt werden:

In einer ersten Bildverarbeitungseinheit, die vorzugsweise einer der Bearbeitungsvorrichtungen für Postsendungen zugeordnet ist, wird zunächst durch eine separate Prozessroutine überprüft, ob die lokale Bildverarbeitungseinheit ausreichend Bearbeitungskapazität zur Verarbeitung der auf der Postsendung befindlichen graphischen Information enthält.

Ist dies nicht der Fall, werden die graphischen Informationen an eine freie Bearbeitungskapazität aufweisende weitere Bildverarbeitungseinheit weitergeleitet.

Auch für den Fall, dass die der Bearbeitungsmaschine für die Postsendung zugeordnete Bildverarbeitungseinheit eine für die Verarbeitung der Bilddaten ausreichende Kapazität aufweist, ist für einzelne Postsendungen eine Weiterleitung der erfassten graphischen Informationen vorteilhaft.

Eine Weiterleitung der graphischen Informationen ist insbesondere dann zweckmäßig, wenn die graphischen Informationen ganz oder teilweise einer speziellen Freimachung entsprechen. Insbesondere ist eine derartige Weiterleitung zweckmäßig, wenn die graphischen Informationen einer speziellen Freimachungsart, beispielsweise einer Absenderfreistempelung oder einer digitalen Freimachung entsprechen.

Die Bilddaten derartiger Sendungen werden an die spezialisierten Leser für die Freimachungsarten Absenderfreimachung AFM und digitaler Frankiervermerke (PC-Frankierung) PC-F weitergeleitet.

Wird das Vorhandensein einer derartigen Freimachungsart erkannt, werden die hierzu gehörigen Überprüfungsschritte durchgeführt.

Beispielsweise übernimmt der AFM-Leser als Beispiel eines spezialisierten Lesegerätes das Sendungsbild von der zentralen Bildverarbeitungseinheit.

Der AFM-Leser sucht anschließend innerhalb einer erwarteten Freimachungszone nach einer Absenderfreimachung. Der Abdruck der Absenderfreistempelung besteht vorzugsweise aus drei Teilen, aus denen der AFM-Leser den Freistempelabdruck erkennt.

Vorzugsweise sind dies der Entgeltstempelabdruck mit Erkennung der Stempelmaschine, der Tagesstempelabdruck und das zusätzliche Feld für Absenderangabe und Werbung.

Der AFM-Leser erkennt den Entgeltstempelabdruck als Ganzes und identifiziert ihn anhand eines oder mehrerer geeigneter graphischen Symbole, beispielsweise eines in dem Entgeltstempel enthaltenen Posthorns.

Anschließend liest der AFM-Leser die Kennung des Entgeltstempels und den eingedruckten Entgeltbetrag.

Für den Fall, dass der Freistempelabdruck nicht gelesen werden kann oder nicht einem erwarteten Freistempelabdruck entspricht, wird eine Warnmeldung erzeugt.

Eine derartige Warnmeldung kann vorzugsweise die Form eines geeigneten Entgeltsicherungscodes aufweisen, beispielsweise als sogenannte Entgeltsicherungscodierung auf einen möglichen Grund eines Fälschungsverdachts hinweisen.

Beispiele einer derartigen Entgeltsicherungscodierung sind die Informationen, dass die Kennung oder die Freimachung nicht lesbar sind.

Bei einem Einsatz von digitalen Freimachungsvermerken werden beispielsweise in dem Freimachungsvermerk enthaltene verschlüsselte Informationen mit den auf der zugehörigen Postsendung enthaltenen unverschlüsselten Informationen verglichen.

Bei Abweichungen, beispielsweise für den Fall, dass die Postsendung eine Empfängeradresse enthält, die nicht den in dem digitalen Freimachungsvermerk enthaltenen verschlüsselten Adressen entspricht, wird die entsprechende Sendung gleichfalls mit einem Entgeltsicherungscode versehen.

Die mit derartigem Entgeltsicherungscode versehenen Postsendungen können mit geeigneten weiteren Überprüfungsschritten bearbeitet und/oder gezielt aus dem Sendungsverlauf ausgeschleust werden.

Das dargestellte Bildverarbeitungsverfahren eignet sich für einen derartigen Einsatz in einem Entgeltsicherungssystem besonders, jedoch kann es auch sonst zu einer wirksameren Steuerung der Verarbeitung der Postsendungen eingesetzt werden.

## Patentansprüche

1. Verfahren zum Bearbeiten von Postsendungen, bei dem auf der Oberfläche einer Postsendung befindliche graphische Informationen im Bereich einer Briefbearbeitungsstation erfasst und untersucht werden, worauf sie an eine Bildverarbeitungseinheit übermittelt und von dieser Bildverarbeitungseinheit weiterverarbeitet werden,
**dadurch gekennzeichnet,**
**dass** die graphischen Informationen einer Freimachungsart zugeordnet und zur Überprüfung der jeweiligen Freimachungsart einem dafür spezialisierten Lesemittel übermittelt werden.

2. Verfahren nach Anspruch 1,
**dadurch gekennzeichnet,**
**dass** die Zuordnung der graphischen Informationen zu einem spezialisierten Lesemittel durch die Bildverarbeitungseinheit erfolgt.

3. verfahren nach einem oder beiden der Ansprüche 1 und 2,
**dadurch gekennzeichnet**,
Auswahl des spezialisierten Lesemittels nach den aktuellen Kapazitäten verfügbarer Lesemittel richtet.

4. Verfahren nach einem oder mehreren der vorangegangenen Ansprüche,
**dadurch** gekennzeichnt,
dass die auf der Oberfläche der Postsendungen befindlichen graphischen Informationen nach der Erfassung von der Briefbearbeitungsstation dahingehend untersucht werden, ob die erfassten graphischen Informationen von erwarteten graphischen Informationen abweichen und dass die ermittelten graphischen Informationen für den Fall, dass sie von den erwarteten graphischen Informationen abweichen, an eine Bildverarbeitungseinheit übermittelt werden.

5. Verfahren nach einem oder mehreren der vorangegangenen Ansprüche,
**dadurch gekennzeichnet,**
**dass** durch einen Vergleich zwischen den auf den Oberflächen der Postsendungen befindlichen graphischen Informationen und erwarteten graphischen Informationen eine Überprüfung des für die Postsendung erwarteten Entgelts erfolgt.

6. Verfahren nach Anspruch 5,
**dadurch gekennzeichnet,**
**dass** die Prüfung, ob eine Postsendung ein erwartetes Entgelt aufweist, zweistufig stattfindet, wobei zunächst von einem Mittel im Bereich der Briefbearbeitungsstation die auf den Postsendungen vorhandenen graphischen Informationen mit den erwarteten graphischen Informationen verglichen werden, und dass die graphischen Informationen der Postsendungen, bei denen Abweichungen zwischen den vorhandenen graphischen Informationen und den erwarteten graphischen Informationen im Bereich der Bearbeitungsmaschinen ermittelt wurden, ein erneuter Vergleich zwischen den ermittelten graphischen Informationen und den erwarteten graphischen Informationen in einem spezialisierten Lesemittel erfolgt.

7. Verfahren nach einem oder mehreren der vorangegangenen Ansprüche,
**dadurch gekennzeichnet,**
**dass** eine Briefbearbeitungsstation die erfassten graphischen Informationen einer Postsendung zusammen mit Begleitinformationen an eine Bildverarbeitungseinheit übermittelt.

8. Verfahren nach Anspruch 7,
**dadurch gekennzeichnet,**
**dass** die Begleitinformationen Ergebnisse beinhalten, die in einem oder mehreren von Mitteln einer Briefbearbeitungsstation durchgeführten Überprüfungsschritten der Postsendung ermittelt wurden.

9. verfahren nach einem oder mehreren der vorangegangenen Ansprüche,
**dadurch gekennzeichnet,**
**dass** eine Sortierung der Postsendungen in Abhängigkeit von den erfassten graphischen Informationen erfolgt.

10. Vorrichtung zum Bearbeiten von Postsendungen mit mehreren Briefbearbeitungsstationen für die Postsendungen, wobei die Briefbearbeitungsstationen Mittel zum Erfassen von auf der Oberfläche von Postsendungen befindlichen graphischen Informationen aufweisen,
**dadurch gekennzeichnet,**
**dass** die Briefbearbeitungsstationen in Verbindung mit einer oder mehreren Bildverarbeitungseinheiten stehen, und die Bildverarbeitungseinheit Mittel zur Zuordnung der graphischen Informationen zu einer erwarteten Freimachungsart und Mittel zur Übermittlung der graphischen Informationen an ein für die ermittelte Freimachungsart spezialisiertes Lesemittel aufweist.

## Claims

1. A method for processing mailpieces, in which graphic information present on the surface of a mailpiece is detected and examined in the area of a mail processing station, after which it is transmitted to an image processing unit and further processed by this image processing unit,
**characterized in that**
the graphic information is associated with a type of postage and is transmitted to a reading means specialized for this purpose so that the type of postage in question can be checked.

2. The method according to Claim 1,
**characterized in that**
the association of the graphic information with a specialized reading means is carried out by the image processing unit.

3. The method according to one or both of Claims 1 and 2,
**characterized in that**
the selection of the specialized reading means depends on the momentary capacities of the available reading means.

4. The method according to one or more of the preceding claims,
**characterized in that**,
after its detection, the graphic information present on the surface of the mailpieces is examined by the mail processing station in order to ascertain whether the detected graphic information differs from the expected graphic information and **in that**, if the ascertained graphic information differs from the expected graphic information, the ascertained graphic information is transmitted to a central image processing unit.

5. The method according to one or more of the preceding claims,
**characterized in that**
the expected payment made for the mailpieces is checked by comparing the graphic information present on the surfaces of the mailpieces with the expected graphic information.

6. The method according to Claim 5,
**characterized in that**
the checking procedure to ascertain whether a mailpiece has an expected payment is performed in two stages, whereby first of all, the graphic information present on the mailpieces is compared to the expected graphic information by a means in the area of the mail processing station, and **in that** the graphic information of the mailpieces in which differences between the existing graphic information and the expected graphic information were ascertained in the area of the processing machines undergoes another comparison between the ascertained graphic information and the expected graphic information in a specialized reading means.

7. The method according to one or more of the preceding claims,
**characterized in that**
a mail processing station transmits the detected graphic information of a mailpiece together with accompanying information to an image processing unit.

8. The method according to Claim 7,
**characterized in that**
the accompanying information contains results that were ascertained by a mail processing station in one or more checking steps for the mailpiece.

9. The method according to one or more of the preceding claims,
**characterized in that**
the mailpieces are sorted as a function of the detected graphic information.

10. A device for processing mailpieces with several mail processing stations for the mailpieces, whereby the mail processing stations have means for detecting graphic information present on the surface of mailpieces,
**characterized in that**
the mail processing stations are connected to one or more image processing units, and the image processing unit has means for associating the graphic information with an expected type of postage and means for transmitting the graphic information to a specialized reading means for the ascertained type of postage.

## Revendications

1. Procédé de traitement d'envois postaux, dans lequel on enregistre et on étudie des informations graphiques se trouvant sur la surface d'un envoi postal au niveau d'un poste de traitement de lettres, sur quoi celles-ci sont transmises à une unité de traitement d'images et sont retraitées par cette unité de traitement d'images,
**caractérisé en ce que**
les informations graphiques sont associées à un type d'affranchissement et transmises à un moyen de lecture spécialisé à cet effet pour contrôler le type respectif d'affranchissement.

2. Procédé selon la revendication 1,
**caractérisé en ce que**
l'association des informations graphiques à un moyen de lecture spécialisé est faite par l'unité de traitement d'images.

3. Procédé selon une ou selon les deux revendications 1 et 2,
**caractérisé en ce que**
le choix du moyen de lecture spécialisé est orienté en fonction des capacités existantes des moyens de lecture disponibles.

4. Procédé selon une ou plusieurs des revendications précédentes,
**caractérisé en ce que**
les informations graphiques se trouvant sur la surface des envois postaux sont étudiées après l'enregistrement par le poste de traitement de lettres pour déterminer si les informations graphiques enregistrées diffèrent des informations graphiques attendues et que les informations graphiques déterminées, dans le cas où elles diffèrent des informations graphiques attendues, sont transmises à une unité de traitement d'images.

5. Procédé selon une ou plusieurs des revendications précédentes,
**caractérisé en ce que**,
en comparant les informations graphiques se trouvant sur les surfaces des envois postaux et les informations graphiques attendues, on procède à un contrôle du paiement attendu pour l'envoi postal.

6. Procédé selon la revendication 5,
**caractérisé en ce que**
le contrôle du fait qu'un envoi postal a fait l'objet d'un paiement attendu se fait en deux niveaux, sachant qu'un moyen se trouvant au niveau du poste de traitement de lettres compare d'abord les informations graphiques disponibles sur les envois postaux aux informations graphiques attendues et que, pour les informations graphiques des envois postaux pour lesquelles des différences entre les informations graphiques disponibles et les informations graphiques attendues ont été déterminées au niveau des machines de traitement, on procède à une nouvelle comparaison entre les informations graphiques déterminées et les informations graphiques attendues dans un moyen de lecture spécialisé.

7. Procédé selon une ou plusieurs des revendications précédentes,
**caractérisé en ce que**
un poste de traitement de lettres transmet les informations graphiques enregistrées d'un envoi postal avec des informations d'accompagnement à une unité de traitement d'images.

8. Procédé selon la revendication 7,
**caractérisé en ce que**
les informations d'accompagnement contiennent des résultats qui ont été déterminés dans une ou plusieurs étapes de contrôle de l'envoi postal effectuées par des moyens d'un poste de traitement de lettres.

9. Procédé selon une ou plusieurs des revendications précédentes,
**caractérisé en ce que**
on procède à un tri des envois postaux en fonction des informations graphiques enregistrées.

10. Dispositif de traitement d'envois postaux au moyen de plusieurs postes de traitement de lettres pour les envois postaux, dans lequel les postes de traitement de lettres comprennent des moyens d'enregistrement d'informations graphiques se trouvant sur la surface des envois postaux,
**caractérisé en ce que**
les postes de traitement de lettres sont en liaison avec une ou plusieurs unités de traitement d'images et que l'unité de traitement d'images comprend des moyens d'association des informations graphiques à un type d'affranchissement attendu et des moyens de transmission des informations graphiques à un moyen de lecture spécialisé pour le type d'affranchissement déterminé.
